# EUROPEAN PATENT APPLICATION

(11) **EP 3 118 486 A1**
(43) Date of publication of application: **18.01.2017**
(21) Application number: 15176502.1
(22) Date of filing: 13.07.2015
(51) Int. Cl.: F16H 25/06

(54) **SPEED CHANGE MECHANISM COMPRISING AN ECCENTRIC CAM DISK MECHANISM**

(71) Applicant: Hsu, Chun-Tang, Taipei City (TW)
(72) Inventor: Hsu, Chun-Tang, Taipei City (TW)
(74) Representative: Lang, Christian

(57) **Abstract**

A speed change mechanism includes a housing (10), a guiding disc (20), a plurality of rolling columns (30), an input shaft (40), an output disc (50), and plural sleeves (60). The housing (10) includes an orifice (11), the guiding disc (20) includes a connecting hole (21), a plurality of notches (22), and the plurality of rolling columns (30) equidistantly arranged and fixed in the plurality of notches (22). The input shaft (40) includes a first stem (41), a second stem (42), and a cam (43), the output disc (50) includes an aperture (53), an output shaft (51), and plural posts (52). The plural sleeves (60) are fitted on the plural posts (52) and between the housing (10) and the plurality of rolling columns (30), and the plurality of rolling columns (30) abut against the cam (43), such that when the input shaft (40) rotates, it drives the plurality of rolling columns (30) to rotate.

## Description

### BACKGROUND OF THE INVENTION

### 1. Field of the Invention

The present invention relates to a speed change mechanism which accelerates or decelerates a rotating speed.

### 2. Description of the Related Art

A conventional gear reducer is employed to decelerate rotating speed of transmission equipment, such as electric motor or internal combustion engine, by using a small gear of an input shaft and a large gear of an output shaft for meshing with the small gear, thus obtaining rotating torque.

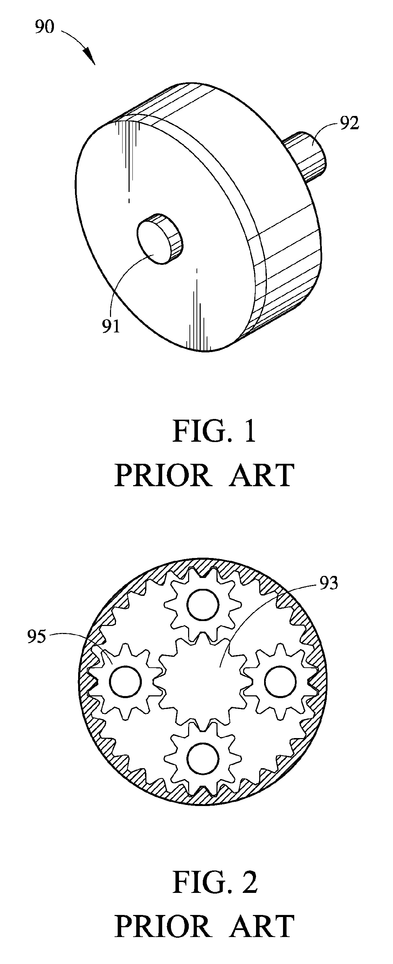

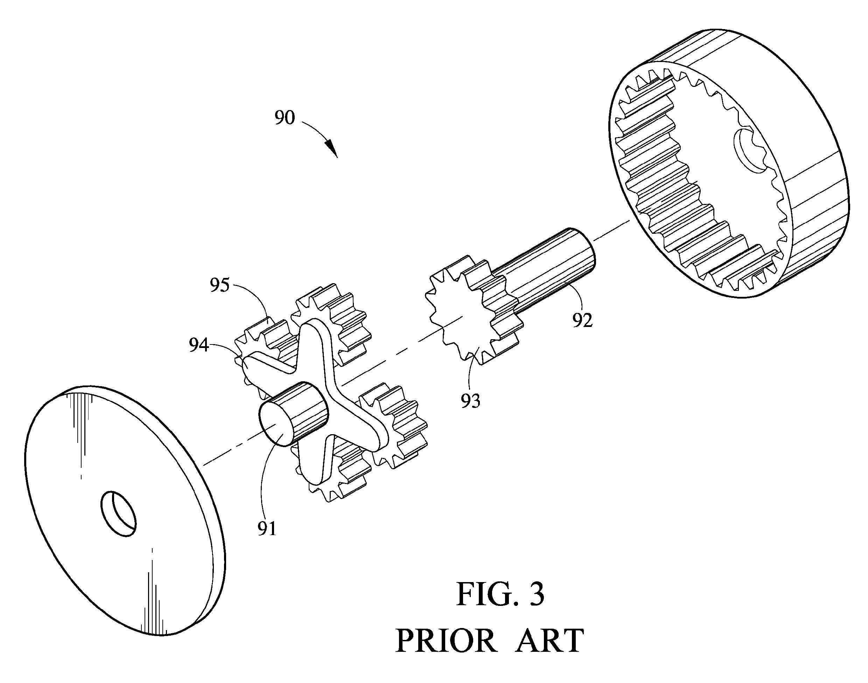

Referring to FIGS. 1 to 3, a conventional planetary gear reducer 90 contains an output shaft 91, an input shaft 92 being coaxial with the output shaft 91 and connecting with a motor (not shown), a sun gear 93 coupling with the input shaft 92, a support rack 94 for fixing the sun gear 93, and plural planetary gears 95 rotating along the sun gear 93, such that the plural planetary gears 95 receive a same torque to reduce rotating speed. However, the plural planetary gears 95 have more teeth to cause complicate production, troublesome maintenance, and easy damage.

The present invention has arisen to mitigate and/or obviate the afore-described disadvantages.

### SUMMARY OF THE INVENTION

The primary objective of the present invention is to provide a speed change mechanism which accelerates or decelerates a rotating speed and provides high torque to external apparatus.

To obtain the above, a speed change mechanism provided by a first embodiment of the present invention contains a housing, a guiding disc, a plurality of rolling columns, an input shaft, an output disc, and plural sleeves.

The housing includes an orifice defined on a central position thereof.

The guiding disc is mounted in the housing and includes a connecting hole formed on a central position thereof and being coaxial with the orifice of the connecting hole; the guiding disc also includes a plurality of notches equidistantly arranged around a peripheral side thereof and relative to the connecting hole.

The plurality of rolling columns are equidistantly arranged and fixed in the plurality of notches of the guiding disc.

The input shaft is secured in the housing and includes a first stem, a second stem, and a cam; wherein the first stem extends outwardly from a central position of a first end of the cam and inserts into the connecting hole and the orifice, and the second stem extends outwardly from a central position of a second end of the cam.

The output disc is disposed on the housing and includes an aperture defined on a central position thereof and fitting with the second stem of the input shaft, the output disc also includes an output shaft extending outwardly from a first end thereof and plural posts extending outwardly from a second end thereof, wherein the output shaft is located at the central position of the output disc, the aperture passes through the output shaft, and the plural posts are equidistantly arranged around a peripheral side of the second end of the output disc relative to the aperture.

The plural sleeves are fitted on the plural posts and between the housing and the plurality of rolling columns.

The plurality of rolling columns abut against the cam, such that when the input shaft rotates, it drives the plurality of rolling columns to rotate.

In addition, a speed change mechanism provided by a second embodiment of the present invention contains a housing, a guiding disc, a plurality of driving balls, an input shaft, an output disc, and plural driven balls.

The housing includes an orifice defined on a central position thereof.

The guiding disc is mounted in the housing and includes a connecting hole formed on a central position thereof and being coaxial with the orifice of the connecting hole; the guiding disc also includes a plurality of cavities equidistantly arranged around a peripheral side thereof and relative to the connecting hole.

The plurality of driving balls are equidistantly arranged and fixed in the plurality of cavities of the guiding disc.

The input shaft is secured in the housing and includes a first stem, a second stem, and a cam; wherein the first stem extends outwardly from a central position of a first end of the cam and inserts into the connecting hole and the orifice, and the second stem extends outwardly from a central position of a second end of the cam.

The output disc is disposed on the housing and includes an aperture defined on a central position thereof and fitting with the second stem of the input shaft, the output disc also includes an output shaft extending outwardly from a first end thereof and plural recesses defined around a second end thereof, wherein the output shaft is located at the central position of the output disc, the aperture passes through the output shaft, and the plural recesses are equidistantly arranged around a peripheral side of the second end of the output disc relative to the aperture.

The plural driven balls are accommodated in the plural recesses and between the housing and the plurality of driving balls.

The plurality of driving balls abut against the cam, such that when the input shaft rotates, it drives the plurality of driving ball to rotate.

### BRIEF DESCRIPTION OF THE DRAWINGS

FIG. 1 is a perspective view showing the assembly of a conventional planetary gear reducer.
FIG. 2 is a cross sectional view showing the assembly of the conventional planetary gear reducer.
FIG. 3 is a perspective view showing the exploded components of the conventional planetary gear reducer.
FIG. 4 is a perspective view of a speed change mechanism according to a first embodiment of the present invention.
FIG. 5 is a cross sectional view along the direction of 5-5 in FIG. 4 according to the first embodiment of the present invention.
FIG. 6 is a perspective view showing the exploded components of the speed change mechanism according to the first embodiment of the present invention.
FIG. 7A is a plan view showing the operation of a plurality rolling columns of the speed change mechanism according to the first embodiment of the present invention.
FIG. 7B is another plan view showing the operation of the plurality rolling columns of the speed change mechanism according to the first embodiment of the present invention.
FIGS. 8A to 8E are a cross sectional view showing the operation of the speed change mechanism according to the first embodiment of the present invention.
FIG. 9 is a partial cross sectional view of a speed change mechanism according to a second embodiment of the present invention.
FIG. 10 is a cross sectional view along the direction of 10-10 in FIG. 9.
FIG. 11 is a perspective view showing the assembly exploded components of the speed change mechanism according to the second embodiment of the present invention.
FIG. 12A is a plan view showing the operation of the plurality of rolling columns of the speed change mechanism according to the second embodiment of the present invention.
FIG. 12B is another plan view showing the operation of the plurality of rolling columns of the speed change mechanism according to the second embodiment of the present invention.
FIGS. 13A to 13C are a cross sectional view showing the operation of the speed change mechanism according to the second embodiment of the present invention.

### DETAILED DESCRIPTION OF THE PREFERRED EMBODIMENTS

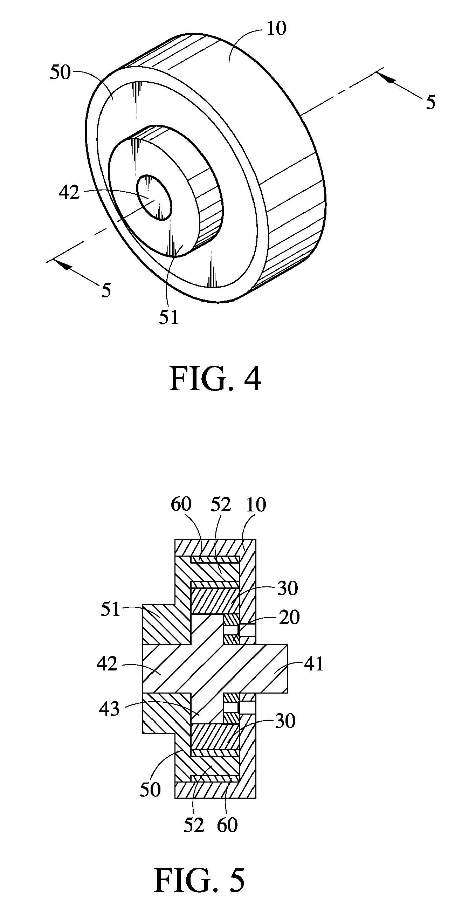

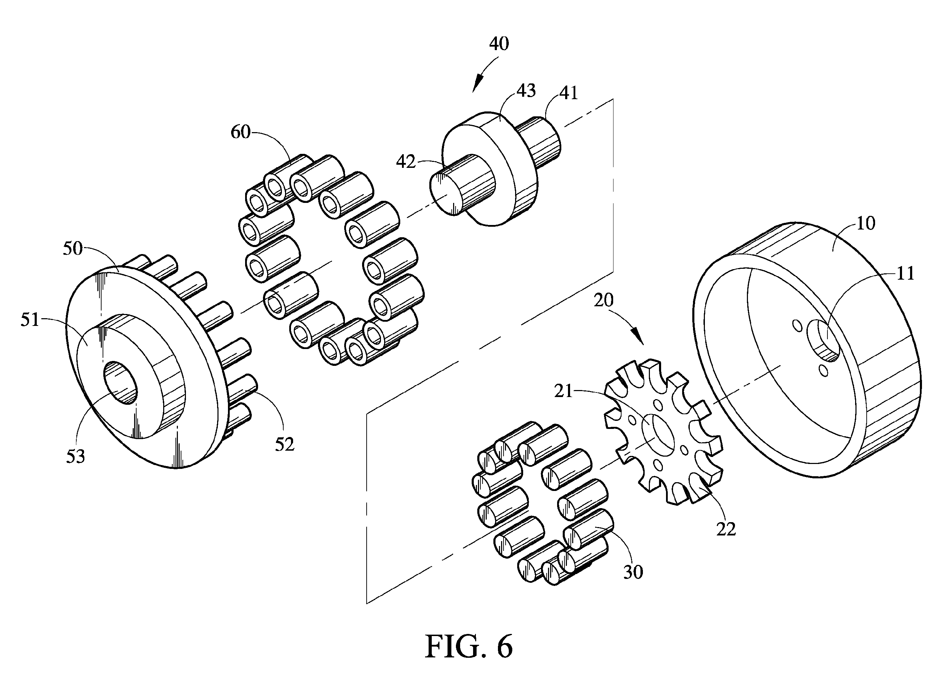

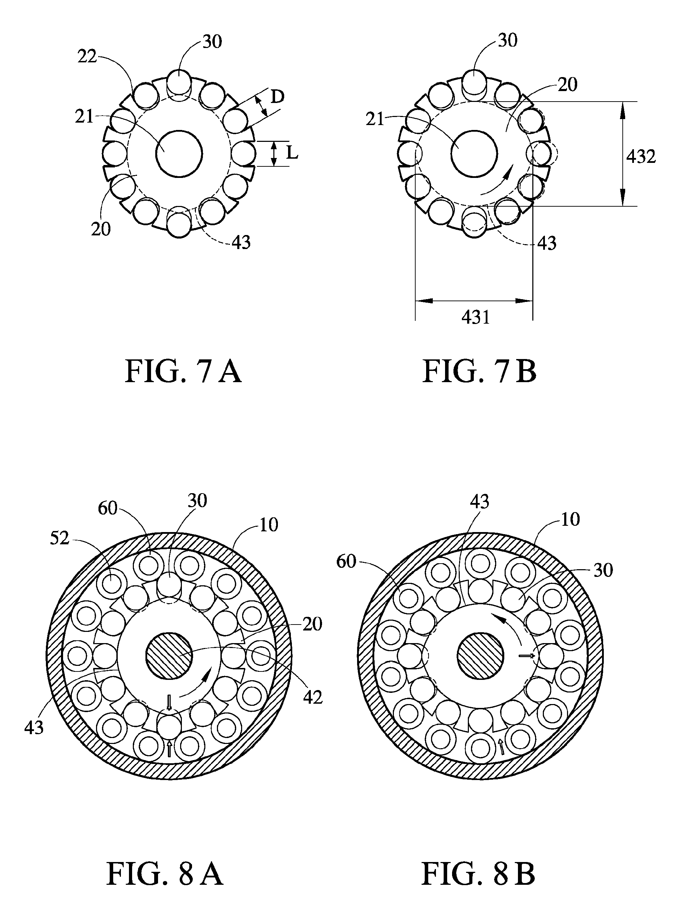

With reference to FIGS. 4, 5 and 6, a speed change mechanism according to a first embodiment of the present invention comprises a housing 10, a guiding disc 20, a plurality of rolling columns 30, an input shaft 40, an output disc 50, and plural sleeves 60; wherein the housing 10 includes an orifice 11 defined on a central position thereof, the guiding disc 20 is mounted in the housing 10 and includes a connecting hole 21 formed on a central position thereof and being coaxial with the orifice 11 of the connecting hole 21. Referring further to FIGS. 7A and 7B, the guiding disc 20 includes a plurality of notches 22 equidistantly arranged around a peripheral side thereof and relative to the connecting hole 21, and the plurality of rolling columns 30 are equidistantly arranged and fixed in the plurality of notches 22 of the guiding disc 20. In this embodiment, the plurality of rolling columns 30 have a same size, each rolling column 30 has a first diameter D, and an opening of each notch 22 has a second diameter L, wherein the second diameter L of the opening of each notch 22 is greater than the first diameter D of each rolling column 30, such that each rolling column 30 moves in each notch 22 and a part thereof extends out of each notch 22.

The input shaft 40 is secured in the housing 10, the output disc 50 is disposed on the housing 10 and includes an output shaft 51 extending outwardly from a first end thereof and plural posts 52 extending outwardly from a second end thereof, wherein the output shaft 51 is located at a central position of the output disc 50, and the output disc 50 also includes an aperture 53 defined on the central position thereof. In detail, the aperture 53 passes through the output shaft 51, i.e., the aperture 53 passes through the central position of the output disc 50. The plural posts 52 are equidistantly arranged around a peripheral side of the second end of the output disc 50 relative to the aperture 53.

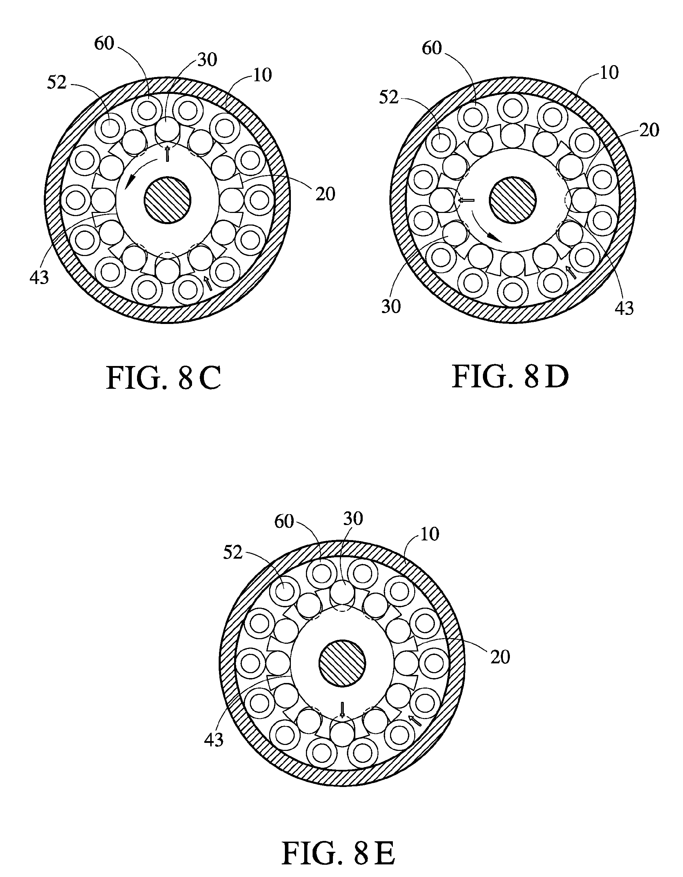

As shown in FIGS. 8A to 8E, the input shaft 40 includes a first stem 41, a second stem 42, and a cam 43. A cross section of the cam 43 is in a football shape, as illustrated in FIG. 8A. With reference to FIG. 8B, the cam 43 has a first diameter length 431 and a second diameter length 432 perpendicular to the first diameter length 431, wherein the first diameter length 431 is greater than the second diameter length 432, and the first stem 41 extends outwardly from a central position of a first end of the cam 43 and inserts into the connecting hole 21 and the orifice 11, the second stem 42 extends outwardly from a central position of a second end of the cam 43 and inserts into the output disc 53. In detail, the output disc 50 is fitted on the second stem 42 of the input shaft 40. The plural sleeves 60 are fitted on the plural posts 52 and between the housing 10 and the plurality of rolling columns 30. In detail, each sleeve 60 abuts against each rolling column 30 and an inner surface of the housing 10, and each rolling column 30 is fixed between each sleeve 60 and the cam 43, i.e., each rolling column 30 is biased against the cam 43, such that when the input shaft 40 is driven by an external force, the cam 43 drives the plurality of rolling columns 30 to rotate, and the output disc 50 is driven by the plurality of rolling columns 30 to rotate, hence the speed change mechanism changes its rotating speed and does not offset centrifugally at high rotating speed.

FIGS. 7A and 7B are a plan view showing the operation of the plurality of rolling columns of the speed change mechanism according to the first embodiment of the present invention. FIGS. 8A to 8E are a cross sectional view showing the operation of the speed change mechanism according to the first embodiment of the present invention. When the input shaft 40 is driven by the external force, the cam 43 rotates and abuts against the plurality of rolling columns 30, such that the plurality of rolling columns 30 are driven by the cam 43 to rotate. Thereafter, the plurality of rolling columns 30 rotate in the plurality of notches 22 of the guiding disc 20, i.e., when the plurality of rolling columns 30 contact with the cam 43, they move in the plurality of notches 22 and the part of each rolling column 30 extends out of each notch 22 to abut against and to rotate each sleeve 60, such that each post 52 is rotated by each sleeve 60 to revolve the output disc 50, and then the output shaft 51 is rotated with the output disc 50, thus driving an external component(s).

In detail, when the input shaft 40 is driven by the external force to rotate, two sides of the cam 43 on the first diameter length 431 rotate along central positions of the first end and the second end of the cam 43, for example, as shown in FIG. 8A, the two sides of the cam 43 on the first diameter length 431 are located at six o'clock position and twelve o'clock position and abut against two of the plurality of rolling columns 30 which are located at the six o'clock position and the twelve o'clock position, and each rolling column 30 simultaneously contacts with each sleeve 60. Referring further to FIGS. 7C and 7D, after the cam 43 is driven by the external force to rotate counterclockwise and is biased against the plurality of rolling columns 30, the plurality of rolling columns 30 contact with the two sides of the cam 43 on the first diameter length 431 and move in the plurality of notches 22, wherein each rolling column 30 extends out of each notch 22 to abut against and to rotate each sleeve 60, such that the output disc 50 is revolved. As shown in FIG. 8B, the two sides of the cam 43 on the first diameter length 431 are located at three o'clock position and nine o'clock position and abut against two of the plurality of rolling columns 30 which are located at the three o'clock position and the nine o'clock position, thus rotating the plurality of rolling columns 30 in turn. FIGS. 8A to 8E show a rotating cycle time of the cam. Thereby, the cam 43 drives the plurality of rolling columns 30 to rotate in the guiding disc 20, and the plurality of rolling columns 30 drive the plural sleeves 60 and the output disc 50 to revolve, such that the output shaft 51 is rotated with the output disc 50, thus changing rotating speed of the speed change mechanism and providing high torque to external apparatus.

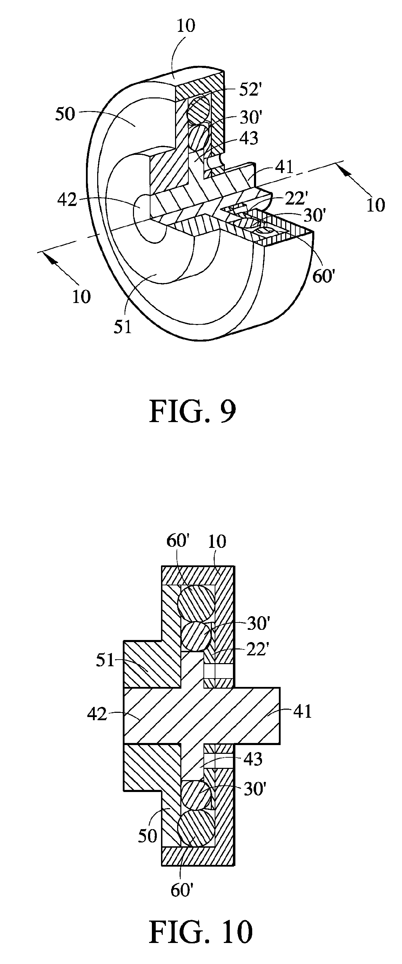

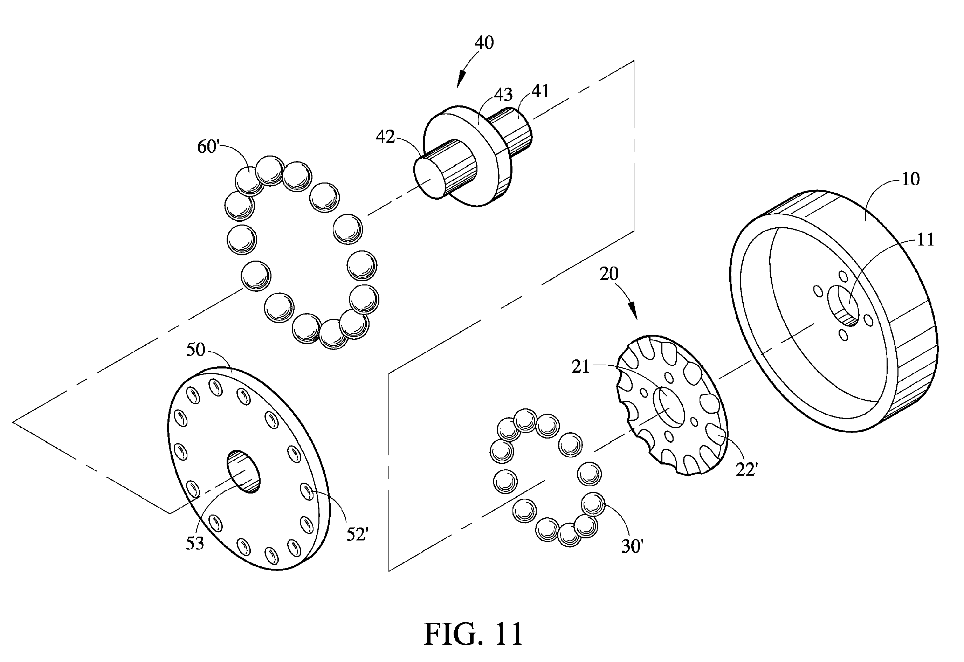

With reference to FIGS. 9 to 11, a speed change mechanism according to a second embodiment of the present invention comprises: a housing 10, a guiding disc 20, a plurality of driving balls 30', an input shaft 40, an output disc 50, and plural driven balls 60'; wherein the housing 10 includes an orifice 11 defined on a central position thereof, the guiding disc 20 is mounted in the housing 10 and includes a connecting hole 21 formed on a central position thereof and being coaxial with the orifice 11 of the connecting hole 21. The guiding disc 20 also includes a plurality of cavities 22' equidistantly arranged around a peripheral side thereof and relative to the connecting hole 21, and the plurality of driving balls 30' are equidistantly arranged and fixed in the plurality of cavities 22' of the guiding disc 20. In this embodiment, the plurality of driving balls 30' have a same size, each driving ball 30' has a first diameter D, and an opening of each cavity 22' has a second diameter L, wherein the second diameter L of the opening of each cavity 22' is greater than the first diameter D of each driving ball 30', such that each driving ball 30' moves in each cavity 22' and a part thereof extends out of each cavity 22'.

The input shaft 40 is secured in the housing 10, the output disc 50 is disposed on the housing 10 and includes an output shaft 51 extending outwardly from a first end thereof and plural recesses 52' defined around a second end thereof, wherein the output shaft 51 is located at a central position of the output disc 50, and the output disc 50 also includes an aperture 53 defined on the central position thereof. In detail, the aperture 53 passes through the output shaft 51, i.e., the aperture 53 passes through the central position of the output disc 50. The plural recesses 52' are equidistantly arranged around a peripheral side of the second end of the output disc 50 relative to the aperture 53.

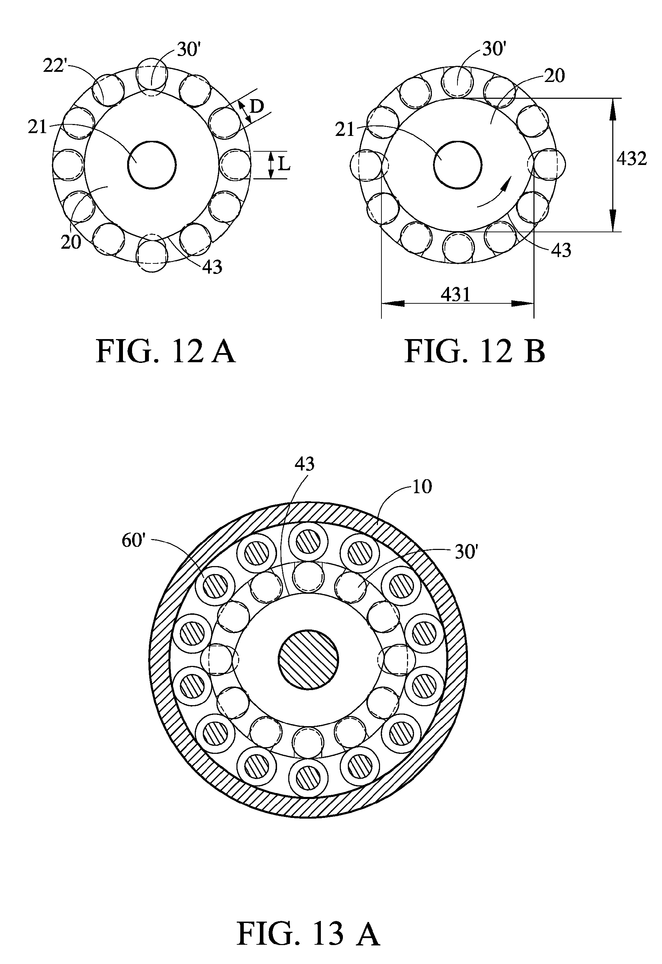

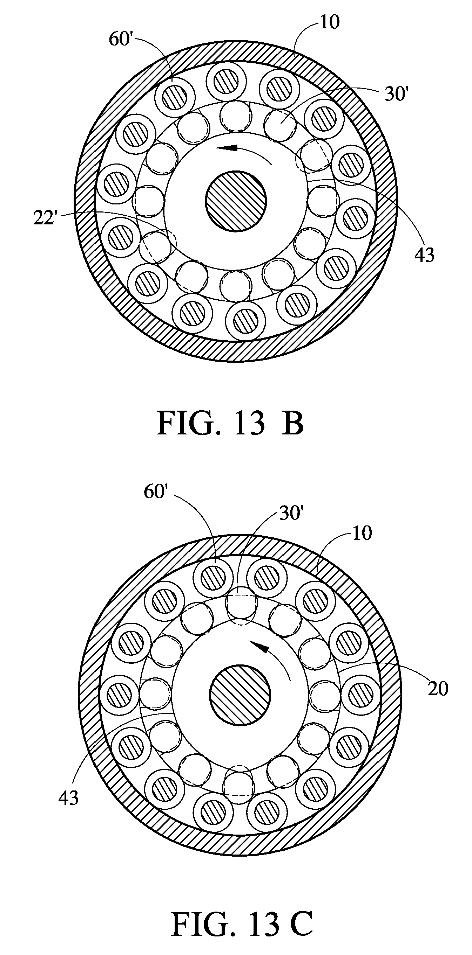

As shown in FIGS. 13A to 13C, the input shaft 40 includes a first stem 41, a second stem 42, and a cam 43. A cross section of the cam 43 is in a football shape, as illustrated in FIG. 13A. With reference to FIG. 13C, the cam 43 has a first diameter length 431 and a second diameter length 432 perpendicular to the first diameter length 431, wherein the first diameter length 431 is greater than the second diameter length 432, and the first stem 41 extends outwardly from a central position of a first end of the cam 43 and inserts into the connecting hole 21 and the orifice 11, the second stem 42 extends outwardly from a central position of a second end of the cam 43 and inserts into the output disc 53. In detail, the output disc 50 is fitted on the second stem 42 of the input shaft 40. The plural driven balls 60' are accommodated in the plural recesses 52' and between the housing 10 and the plurality of driving balls 30'. In detail, each driven balls 60' abuts against each driving ball 30' and an inner surface of the housing 10, and each driving ball 30' is fixed between each driven ball 60' and the cam 43, i.e., each driving ball 30' is biased against the cam 43, such that when the input shaft 40 is driven by an external force, the cam 43 drives the plurality of driving balls 30' to rotate, and the plural driven balls 60' are driven by the plurality of driving balls 30' to revolve the output disc 50, hence the speed change mechanism changes its rotating speed and does not offset centrifugally at high rotating speed.

FIGS. 12A and 12B are a plan view showing the operation of the plurality of rolling columns of the speed change mechanism according to the first embodiment of the present invention. FIGS. 13A to 13C are a cross sectional view showing the operation of the speed change mechanism according to the first embodiment of the present invention. When the input shaft 40 is driven by the external force, the cam 43 rotates and abuts against the plurality of rolling columns 30', such that the plurality of rolling columns 30' are driven by the cam 43 to rotate. Thereafter, the plurality of rolling columns 30' rotate in the plurality of notches 22' of the guiding disc 20, i.e., when the plurality of rolling columns 30' contact with the cam 43, they move in the plurality of notches 22' and the part of each rolling column 30' extends out of each notch 22' to abut against and to rotate each sleeve 60', such that the output disc 50 is rotated by each sleeve 60', and then the output shaft 51 is rotated with the output disc 50, thus driving an external component(s).

In detail, when the input shaft 40 is driven by the external force to rotate, two sides of the cam 43 on the first diameter length 431 rotate along central positions of the first end and the second end of the cam 43, for example, as shown in FIG. 13A, the two sides of the cam 43 on the first diameter length 431 are located at three o'clock position and nine o'clock position and abut against two of the plurality of rolling columns 30' which are located at the three o'clock position and the nine o'clock position, and each rolling column 30' simultaneously contacts with each sleeve 60'. Referring further to FIGS. 13A to 13C, after the cam 43 is driven by the external force to rotate counterclockwise and is biased against the plurality of rolling columns 30', the plurality of rolling columns 30' contact with the two sides of the cam 43 on the first diameter length 431 and move in the plurality of notches 22', wherein each rolling column 30' extends out of each notch 22' to abut against and to rotate each sleeve 60', such that the output disc 50 is revolved. As shown in FIG. 13C, the two sides of the cam 43 on the first diameter length 431 are located at six o'clock position and twelve o'clock position and abut against two of the plurality of rolling columns 30' which are located at the six o'clock position and the twelve o'clock position, thus rotating the plurality of rolling columns 30' in turn. FIGS. 13A to 13C show a rotating cycle time of the cam. Thereby, the cam 43 drives the plurality of rolling columns 30' to rotate in the guiding disc 20, and the plurality of rolling columns 30' drive the plural sleeves 60' and the output disc 50 to revolve, such that the output shaft 51 is rotated with the output disc 50, thus changing rotating speed of the speed change mechanism and providing high torque to external apparatus.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A speed change mechanism comprising:
a housing (10) including an orifice (11) defined on a central position thereof;
a guiding disc (20) mounted in the housing (10) and including a connecting hole (21) formed on a central position thereof and being coaxial with the orifice (11) of the connecting hole (21), the guiding disc (20) also including a plurality of notches (22) equidistantly arranged around a peripheral side thereof and relative to the connecting hole (21);
a plurality of rolling columns (30) equidistantly arranged and fixed in the plurality of notches (22) of the guiding disc (20);
an input shaft (40) secured in the housing (10) and including a first stem (41), a second stem (42), and a cam (43); wherein the first stem (41) extends outwardly from a central position of a first end of the cam (43) and inserts into the connecting hole (21) and the orifice (11), and the second stem (42) extends outwardly from a central position of a second end of the cam (43);
an output disc (50) disposed on the housing (10) and including an aperture (53) defined on a central position thereof and fitting with the second stem (42) of the input shaft (40), the output disc (50) also including an output shaft (51) extending outwardly from a first end thereof and plural posts (52) extending outwardly from a second end thereof, wherein the output shaft (51) is located at the central position of the output disc (50), the aperture (53) passes through the output shaft (51), and the plural posts (52) are equidistantly arranged around a peripheral side of the second end of the output disc (50) relative to the aperture (53); and
plural sleeves (60) fitted on the plural posts (52) and between the housing (10) and
the plurality of rolling columns (30);
wherein the plurality of rolling columns (30) abut against the cam (43), such that when the input shaft (40) rotates, it drives the plurality of rolling columns (30) to rotate.

2. The speed change mechanism as claimed in claim 1, wherein the cam (43) has a first diameter length (431) and a second diameter length (432) perpendicular to the first diameter length (431), and wherein the first diameter length (431) is greater than the second diameter length (432).

3. The speed change mechanism as claimed in claim 2, wherein a cross section of the cam (43) is in a football shape.

4. The speed change mechanism as claimed in claim 1, wherein each rolling column (30) has a first diameter, and an opening of each notch (22) has a second diameter, and wherein the second diameter of the opening of each notch (22) is greater than the first diameter of each rolling column (30).

5. The speed change mechanism as claimed in claim 1, wherein each sleeve (60) abuts against each rolling column (30) and an inner surface of the housing (10).

6. A speed change mechanism comprising:
a housing (10) including an orifice (11) defined on a central position thereof;
a guiding disc (20) mounted in the housing (10) and including a connecting hole (21) formed on a central position thereof and being coaxial with the orifice (11) of the connecting hole (21), the guiding disc (20) also including a plurality of cavities (22') equidistantly arranged around a peripheral side thereof and relative to the connecting hole (21);
a plurality of driving balls (30') equidistantly arranged and fixed in the plurality of cavities (22') of the guiding disc(20);
an input shaft (40) secured in the housing (10) and including a first stem (41), a second stem (42), and a cam (43); wherein the first stem (41) extends outwardly from a central position of a first end of the cam (43) and inserts into the connecting hole (21) and the orifice (11), and the second stem (42) extends outwardly from a central position of a second end of the cam (43);
an output disc (50) disposed on the housing (10) and including an aperture (53) defined on a central position thereof and fitting with the second stem (42) of the input shaft (40), the output disc (50) also including an output shaft (51) extending outwardly from a first end thereof and plural recesses (52') defined around a second end thereof, wherein the output shaft (51) is located at the central position of the output disc (50), the aperture (53) passes through the output shaft (51), and
the plural recesses (52') are equidistantly arranged around a peripheral side of the second end of the output disc (50) relative to the aperture (53); and
plural driven balls (60') accommodated in the plural recesses (52') and between the housing and the plurality of driving balls (30');
wherein the plurality of driving balls (30') abut against the cam (43), such that when the input shaft rotates (40), it drives the plurality of driving ball (30') to rotate.

7. The speed change mechanism as claimed in claim 6, wherein the cam (43) has a first diameter length (431) and a second diameter length (432) perpendicular to the first diameter length (431), and wherein the first diameter length (431) is greater than the second diameter length (432).

8. The speed change mechanism as claimed in claim 7, wherein a cross section of the cam (43) is in a football shape.

9. The speed change mechanism as claimed in claim 6, wherein each driving ball (30') has a first diameter, and an opening of each cavity (22') has a second diameter, and wherein the second diameter of the opening of each cavity (22') is greater than the first diameter of each driving ball (30').

10. The speed change mechanism as claimed in claim 6, wherein each driven ball (60') abuts against each driving ball (30') and an inner surface of the housing (10).
